# EUROPÄISCHE PATENTSCHRIFT

(11) **EP 0 406 519 B1**
(45) Veröffentlichungstag und Bekanntmachung des Hinweises auf die Patenterteilung: **12.01.1994**
(21) Anmeldenummer: 90103000.7
(22) Anmeldetag: 16.02.1990
(51) Int. Cl.: B60J 3/00

(54) **Schminkspiegel od. dgl. für Fahrzeuge**
Vanity mirror or the like for vehicles
Miroir de courtoisie ou des choses pareilles pour véhicules

(30) Priorität: 01.07.1989 DE 3921753
(43) Veröffentlichungstag der Anmeldung: 09.01.1991
(73) Patentinhaber: Gebr. Happich GmbH, D-42097 Wuppertal (DE); MERCEDES-BENZ AG, 70327 Stuttgart (DE)
(72) Erfinder: Viertel, Lothar, D-6636 Altforweiler (DE); Welter, Patrick, F-57730 La Chambre (FR); Kaiser, Peter, D-5632 Wermelskirchen (DE); Zweigart, Gerhard, D-7031 Aidlingen (DE); Reuter, Dieter, D-7032 Sindelfingen (DE)

(56) Entgegenhaltungen:
- EP-A- 0 317 284
- WO-A-86/05146
- US-A- 3 211 903
- US-A- 4 652 982
- US-A- 4 807 093

## Beschreibung

Die Erfindung bezieht sich auf einen Schminkspiegel od. dgl. für Fahrzeuge mit einem an einem Fahrzeug-Einbaukörper, wie Dachverkleidung, Sonnenblende, Kopfstütze od. dgl. befestigbaren Grundkörper und mit einer, einen Spiegel tragenden Klappe, die derart mit dem Grundkörper verbunden ist, daß diese aus einer Ruhestellung in eine Gebrauchsstellung, in der der Spiegel frei einsehbar ist, verschwenkbar ist.

Die Ausrüstung einer Fahrzeugsonnenblende mit einem Schminkspiegel ist bekannt. So zeigt z. B. die WO-A- 86 05 146 eine Sonnenblende mit einer Ausnehmung im Sonnenblendenkörper, in der ein von einem Gehäuse getragener Schminkspiegel schwenkbeweglich angeordnet ist. Wenn sich der Sonnenblendenkörper in der Gebrauchsstellung befindet, kann der Spiegel zusammen mit dem Gehäuse aus seiner Nichtgebrauchslage in der Ausnehmung des Sonnenblendenkörper nach unten in seine Gebrauchslage herausgeklappt und eingesehen werden.

Der vorliegenden Erfindung liegt die Aufgabe zugrunde, einen Schminkspiegel zur Verfügung zu stellen, der besonders einfach zu handhaben ist und der den Ausstattungskomfort eines Fahrzeugs deutlich verbessert.

Die Aufgabe wird durch die im Patentanspruch 1 angegebenen Merkmale gelöst. Vorteilhafte Ausgestaltungen und Weiterbildungen der Erfindung sind in den Unteransprüchen angegeben.

Der erfindungsgemäße Schminkspiegel ist insbesondere, aber nicht ausschließlich, zur Anordnung in einem Dachverkleidungsausschnitt im Fondbereich eines Fahrzeuges und damit vornehmlich für die Benutzung von Fondpassagieren bestimmt. Zweckmäßigerweise werden im Fondbereich eines Fahrzeuges stets zwei Spiegel angeordnet. Von besonderem Vorteil ist die erfindungsgemäß vorgesehene Einstellbarkeit der jeweils gewünschten Schwenkposition des Schminkspiegels, das Halten des Spiegels bzw. der Klappe in der jeweiligen Gebrauchsstellung sowie der durch die Erfindung erzielte Memory-Effekt, der eine jeweilige Neueinstellung der gewünschten Schwenkposition unnötig macht. Weiterhin ist die vorgesehene Beleuchtungseinrichtung des erfindungsgemäßen Schminkspiegels von besonderem Vorteil, weil hierdurch auch eine Benutzung des Spiegels bei schlechten Lichtverhältnissen oder gar bei Dunkelheit ermöglicht wird.

Gemäß der Erfindung kann zum Halten der Klappe in der jeweils eingestellten Gebrauchsstellung eine Bremse vorgesehen sein, die zwei Bremsstege und ein dazwischen einschwenkbares Bremssegment umfaßt. Dabei stehen die Bremsstege durch ein sie übergreifendes Federmittel unter Vorspannung.

Die Erfindung sieht insbesondere auch eine Verschwenkpositions-Verstelleinrichtung zum frei wählbaren Einstellen einer jeweils gewünschten Schwenkposition der Klappe in der Gebrauchsstellung vor. Dabei kann die jeweils vorgebbare Schwenkposition der Klappe in der Gebrauchsstellung durch eine form- oder kraftschlüssig wirkende Sperre, z.B. durch Verzahnung oder Reibungsbeanspruchung festlegbar sein und die Sperre kann gegen die Kraft eines Federmittels lösbar und verstellbar sein.

Zweckmäßigerweise ist der Grundkörper als in eine Öffnung des Fahrzeug-Einbaukörpers, wie Dachverkleidung einsetzbare Schale ausgebildet, die die Klappe in der Ruhelage in versenkter Anordnung aufnimmt. Damit wird ein bündiger Oberflächenabschluß und ein gutes Aussehen erzielt.

Die Klappe ist bevorzugt als Gehäuse ausgebildet, aus deren, in der Gebrauchslage dem Betrachter zugewandten Gehäusewand eine gegen die Kraft des Federmittels betätigbare Drucktaste zum Verstellen der innerhalb des Gehäuses angeordneten Schwenkpositions-Verstelleinrichtung vorsteht. Die Klappe ist als Gehäuse ausgebildet und trägt an der, in der Gebrauchslage dem Betrachter zugewandten Gehäusewand den Spiegel sowie zumindest ein Leuchtfenster, wobei das Gehäuse im Innern mit einer elektrischen Beleuchtungseinrichtung zum Ausleuchten des Leuchtfensters ausgerüstet ist.

Die Erfindung ist des weiteren dadurch gekennzeichnet, daß zwischen Grundkörper und Klappe (Gehäuse) Federmittel vorgesehen sind, durch die die Klappe nach dem Lösen einer Verriegelung aus dem Grundkörper heraus bewegbar ist, wobei die Bewegung der Klappe unter der Kraft der Federmittel gegen die Kraft einer Bremse erfolgt. Nach dem Lösen der Verriegelung, was durch Antippen der Klappe erfolgen kann, schwenkt die Klappe automatisch in die Gebrauchsposition, wobei durch die Bremse ein zu rasches Aufschwenken oder ein hartes Anschlagen vermieden wird. Dabei kann der Grundkörper mit einer Zahnstange und die Klappe mit einem in die Zahnstange eingreifenden mit einer Fettbremse od. dgl. verbundenen Zahnrad versehen sein.

In weiterer Ausgestaltung der Erfindung ist vorgesehen, daß das Gehäuse aus einem Unterteil aus Kunststoff und einem damit verklipsbaren Oberteil aus Kunststoff besteht, wobei das Unterteil die Schwenkpositions-Vertelleinrichtung, die elektrische Beleuchtungseinrichtung (Reflektor, Leiterplatte, Sofitten, Mikroschalter, Leiter) und die Bremse trägt, während das Oberteil mit dem Spiegel, vorzugsweise zwei, links und rechts neben dem Spiegel angeordnete Leuchtfenster versehen ist. Eine solche Ausbildung ist einfach und kostengünstig herstellbar und trägt insbesondere auch den ästhetischen Anforderungen Rechnung. Das Unterteil trägt ferner die Drucktaste und das Federmittel, während das Oberteil mit einer Ausnehmung für den bereichsweisen Durchlaß der, sich im übrigen unter dem Oberteil abstützenden Drucktaste versehen ist.

Es kann weiterhin vorgesehen sein, daß das Unterteil des Gehäuses an einem Randbereich zwei nach außen überstehende Gelenkzapfen aufweist, die in Zapfenaufnahmen des Grundkörpers eingreifen, wobei ein Gelenkzapfen Teil der aus einem Segment gebildeten Schwenkpositions-Verstelleinrichtung ist.

Ferner kann vorgesehen sein, daß die Verriegelung eine aus Torsionsfeder, Auslöser, Zugfeder und Haken bestehende Baugruppe umfaßt, die an einem Randbereich des Grundkörpers angeordnet ist, wobei der Haken in eine randseitige Gehäuseöffnung einrastbar bzw. aus dieser ausklinkbar ist.

Auch kann, insbesondere aus optischen Zwecken, vorgesehen sein, daß die Drucktaste U-förmig ausgebildet ist, mit ihren höhenversetzten Schenkeln zwei Durchbrüche in den Randbereichen des Oberteils durchsetzt und an einem Schenkelende einen mit Bremsbelag od. dgl. versehenen Haken trägt, der mit dem Segment zusammenwirkt, wobei der mit dem Haken versehene Schenkel der Drucktaste durch eine, sich anderendig auf dem Unterteil abstützende Schraubendruckfeder belastet ist. Das Segment ist vorzugsweise außer dem Gelenkzapfen mit einem, zu diesem parallel verlaufenden Mitnehmerzapfen und einem, zu diesem parallelverlaufenden Führungszapfen ausgebildet, wobei auf dem Gelenkzapfen der Spiral- oder Schraubenteil einer Öffnungsfeder sitzt, deren einer Schenkel am Mitnehmerzapfen im Sinne einer Öffnungsbewegung des Gehäuses angreift und deren anderer Schenkel sich am Schalenrand abstützt, und wobei der Führungszapfen in einer kurvenförmigen Kulissennut der Schale bzw. des Grundkörpers geführt ist.

Vorzugsweise sind sämtliche Bestandteile des Schminkspiegels zu einer vorgefertigten Baueinheit zusammengefaßt. Schließlich kann noch vorgesehen sein, daß an der Schale, die aus einem Kunststoff-Spritzgußteil besteht, federnde Klipsnasen angeordnet oder angeformt sind, die den Öffnungsrand in einem Einbaukörper, wie Dachverkleidung hintergreifen.

Ausführungsbeispiele der Erfindung werden nachfolgend anhand der Zeichnung näher erläutert. Es zeigen
- Fig. 1: den Schnitt durch einen Schminkspiegel in der Ruhestellung,
- Fig. 2: den Schnitt durch den Schminkspiegel in einer ersten, etwa 90 ° aufgeschwenkten Gebrauchsstellung,
- Fig. 3: den Schnitt durch den Schminkspiegel in einer zweiten, etwa 130 ° aufgeschwenkten Gebrauchsstellung,
- Fig. 4: den Schnitt A-A nach Fig. 1,
- Fig. 5: einen kompletten Schminkspiegel mit seinen Einzelheiten in einer Explosivdarstellung,
- Fig. 6 bis 9: Prinzipskizzen eines Schminkspiegels mit einer Einrichtung zum Einstellen und Speichern gewünschter Schwenkpositionen,
- Fig. 10: einen kompletten Schminkspiegel mit seinen Einzelheiten in einer Explosivdarstellung und in einer gegenüber Fig. 5 abgewandelten Ausführungsform und
- Fig. 11: eine Einzelheit nach Fig. 10 im vergrößerten Maßstab.

Der neue Schminkspiegel besteht aus einem Grundkörper 1 und einer daran angelenkten Klappe 2.

Der Grundkörper 1 ist als Schale 3 ausgebildet und weist einen Schalenboden 4, Schalenwände 5 und einen Anlageflansch 6 auf. Die Schalenwände 5 sind mit federnden Klipsnasen 7 ausgebildet, die im montierten Zustand des Schminkspiegels die Öffnungsränder einer Dachverkleidung hintergreifen. Die Schale 3, die aus einem Kunststoff-Spritzgußteil besteht, weist weiterhin einen verzahnten Kreisabschnitt als Zahnstange 8, nicht näher dargestellte Lagerzapfenaufnahmen und kurvenförmige Kulissennuten 9 und 10 auf. An einer Schalenwand der Schale 3 sind Stege 11 angeformt, die zur Halterung einer insgesamt mit 12 bezeichneten Verriegelung dienen.

Die Klappe 2 besteht aus einem Gehäuse aus Kunststoff, welches aus einem Unterteil 13 und einem Oberteil 14 zusammengesetzt ist. Das Unterteil 13 ist schalenförmig ausgebildet und weist einen angeformten Lagerzapfen 15, einen angeformten Steg 16 zum Befestigen einer Bremse 17 (deren Zahnrad mit der Zahnstange 8 kämmt), angeformte Stege 18 für die Halterung eines Mikroschalters 19 und, dem Lagerzapfen 15 gegenüberliegend, eine Lagerbohrung 20 auf, welche von einem Drehlagerzapfen 21 einer Schwenkpositions-Verstelleinrichtung 22 durchsetzt wird. Ferner weist das Unterteil 13 angeformte Klipselemente 23 zur Halterung des Oberteils 14 auf.

Das Oberteil 14 ist ebenfalls schalenförmig ausgebildet und trägt einen Sicherheitsspiegel 24, in Ausnehmungen eingesetzte Leuchtfenster 25 und stützt eine U-förmig ausgebildete Drucktaste 26, die ein Bestandteil der Schwenkpositions-Verstelleinrichtung ist, ab, wobei die höhenversetzten Schenkel 27 der Drucktaste Ausnehmungen 28 im Oberteil 14 durchsetzen. Eine Ausnehmung 29 im vorderen Randbereich des Oberteils 14 ist zum Einrasten eines Hakens 35 der Verriegelung 12 vorgesehen.

Die als Gehäuse ausgebildete Klappe 2 umschließt einen Hohlraum, in dem die Bremse 17, der Mikroschalter 19, die Schwenkpositions-Verstelleinrichtung 22 nebst Drucktaste 26 und weiterhin eine Druckfeder 30 sowie eine elektrische Beleuchtungseinrichtung angeordnet sind. Die Beleuchtungseinrichtung umfaßt einen Reflektor 31, eine Leiterplatte 32, Soffitten 33 sowie elektrische Leiter 34, die in geeigneter Weise mit der Fahrzeugelektrik zu verbinden sind.

An der oberen Schalenwand 5 der Schale 3 wird die Verriegelung 12 montiert, welche aus einem Haken 35, einem Auslöser 36, einer Zugfeder 37 und einer Torsionsfeder 38 besteht. Zum Entriegeln der Verriegelung 12 braucht die Klappe 2 lediglich leicht in Pfeilrichtung X angedrückt zu werden, wonach der Haken 35 aus der Gehäuseausnehmung 29 ausrastet. Bei der Montage wird der Haken 35 drehbar mit dem Auslöser 36 und der Torsionsfeder 38 zusammengeführt, wobei die Zugfeder 37 in den Haken 35 und dem oberen Quersteg der Torsionsfeder eingehängt wird. Die am Haken ausgebildeten Lagerzapfen werden sodann in die an der Schale vorgesehenen Aufnahmestege 11 drehbar eingehangen und die Torsionsfeder in die vorgesehenen Laschen und Zapfen eingespannt.

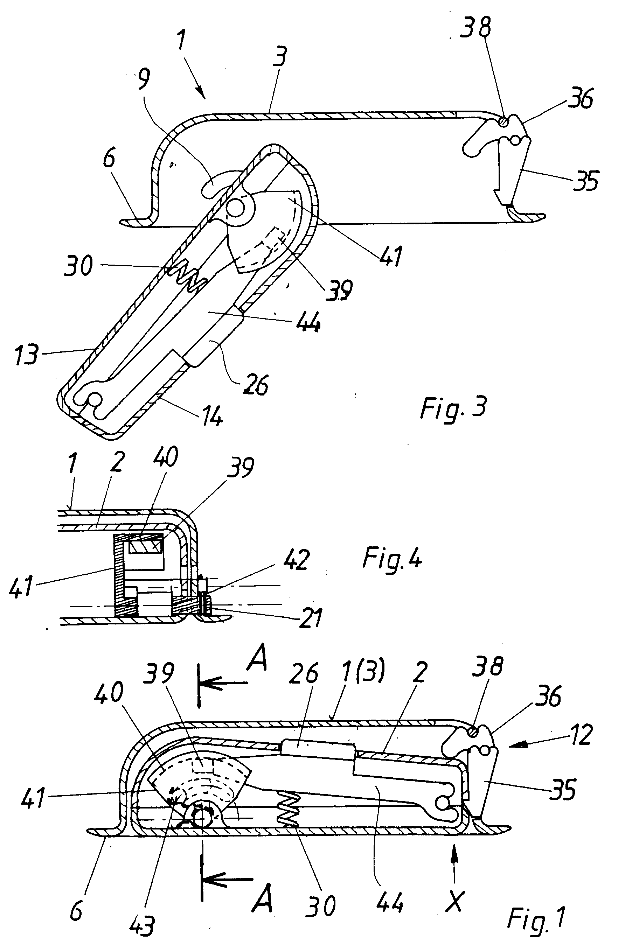

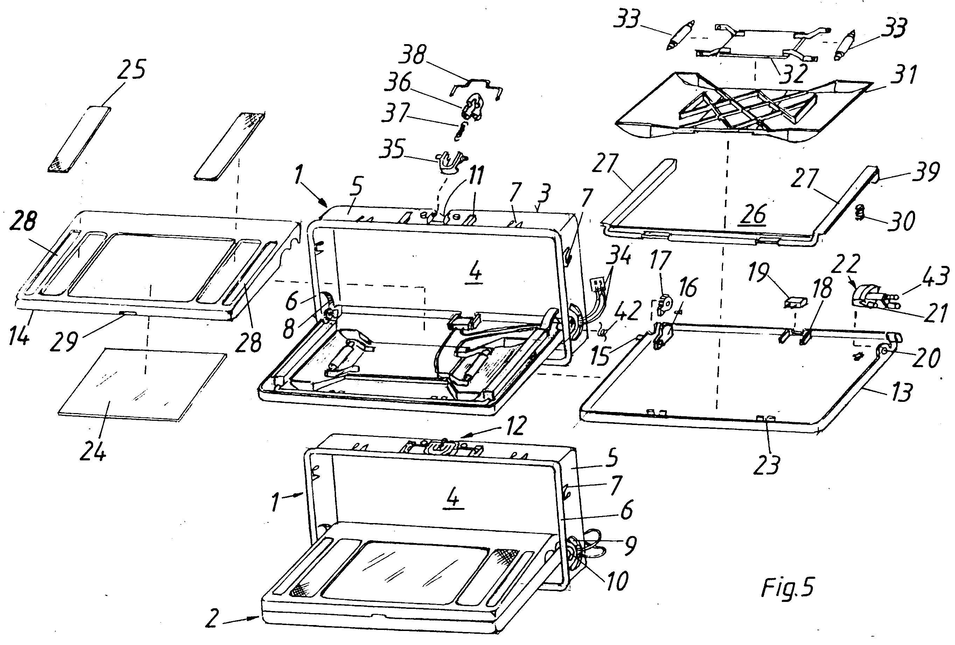

Beim Zusammenbau des neuen Schminkspiegels wird zunächst die Bremse 17 montiert, die für ein sanftes Ausfahren des Gehäuses vorgesehen ist. Sodann erfolgt die Montage des Mikroschalters 19, der die Zwangseinschaltung und -ausschaltung der Beleuchtungseinrichtung bewirkt. Es erfolgt nun die Montage der U-förmig ausgebildeten Drucktaste 26, die durch eine Drahteinlage stabilisiert sein kann. Unter dem rechten Schenkel 27 (Fig. 5) der Drucktaste 26 wird die Druckfeder 30 angeordnet, die durch ihre Reaktionskraft über einen Bremsbelag, der an einem Haken 39 des Schenkels 27 angeordnet ist, auf die Schwenkpositions-Verstelleinrichtung 22, die in den Fig. 1 bis 5 aus einem Segment 41 besteht, wirkt. Der Haken 39 mit Belag greift nach der Montage des Segments unter den dafür vorgesehenen Steg 40 des Kreissegments 41 (Fig. 4) und verharrt im gewählten Öffnungswinkel, wenn die Betätigungstaste 26 losgelassen wird. Jetzt wird das Unterteil 13 mit dem auf der linken Seite angespritzten Lagerzapfen 15 und der montierten Bremse 17 in die Lagerbohrung der Schale 3 eingesetzt, wobei das Zahnrad der Bremse in den verzahnten Kreisabschnitt 8 eingreift. Durch die Montage des Segments 41 wird die schwenkbewegliche Lagerung des Gehäuses bewirkt, in dem der Drehlagerzapfen 21 die Lagerbohrung 20 im Unterteil 13 und eine entsprechende Lagerbohrung in der Schale 3 durchsetzt. Der Lagerzapfen 15 und der Drehlagerzapfen 21 bilden die Schwenkachse für das Gehäuse. An dem aus der Schale 3 heraustretenden Drehlagerzapfen 21 wird eine Drehfeder 42 von außen montiert, die mit einem Federschenkel auf einen aus der Schalenwand 5 durchtretenden Mitnahmezapfen 43 des Segments 41 wirkt und die sich mit ihrem anderen Federschenkel am Schalenrand abstützt. Durch die Drehfeder 42 wird der Drehlagerzapfen 21 axial gesichert und insbesondere ein automatisches Ausklappen der Klappe 2 bewirkt.

Nach der Herstellung der gelenkigen Verbindung zwischen Unterteil 13 und Schale 3 wird die Beleuchtungseinrichtung montiert, indem zunächst der Reflektor 31 am Unterteil durch Einklipsen oder Anschrauben befestigt wird. Es folgt die Anordnung der Leiterplatte 32 und der Soffitten 33 sowie die Verkabelung. Zwei Leiter 34 mit an einem Ende angebrachten zweipoligen Stecker werden mit dem anderen Ende von außen durch die Kulissennut 9 ins Unterteil 13 eingeführt. Die Leiter werden durch ein Schutzröhrchen in der Schalenwand 5 gesichert. Ein Leiter wird am Mikroschalter und der andere am Soffittenkontakt angebracht. Eine Kabelbrücke führt vom Mikroschalter 19 zum anderen Soffittenkontakt. Der Stecker kann in eine, am rückseitigen Schalenboden 4 angeformte Aufnahme eingedrückt und positioniert werden.

Nach dieser Komplettierung kann das Oberteil 14 mit dem Unterteil 13 verbunden werden, indem das Oberteil am Unterteil einseitig eingehebelt und anderseitig in die Klipselemente 23 eingedrückt wird. die Klipszungen sind so ausgebildet, daß das Oberteil 14 mittels eines Werkzeuges vom Unterteil 13 im Bedarfsfall abgehebelt werden kann.

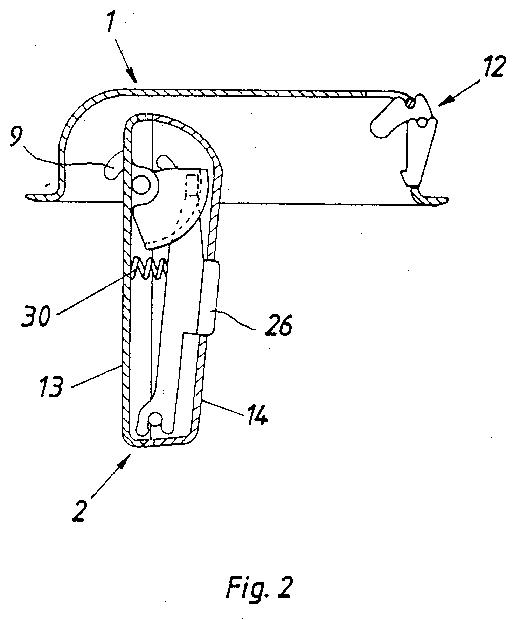

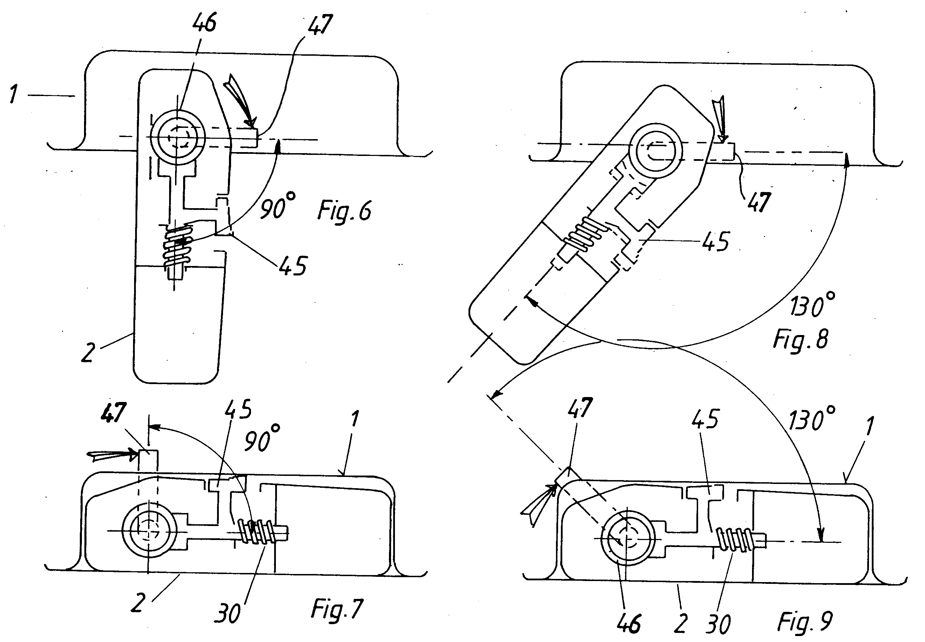

In der Nichtgebrauchslage schließen Grundkörper 1 und Klappe 2 bündig mit der Oberfläche eines Einbauteils ab. Durch Antippen der Klappe 2 wird die Verriegelung 12 gelöst und die Klappe schwenkt durch die Kraft der Drehfeder 42, sanft abgebremst durch die Bremse 17, in eine Gebrauchsstellung. Fig. 2 und 6 zeigen eine Gebrauchsstellung, in der die Klappe 2 etwa 90 Winkelgrade weit geöffnet ist, während die Fig. 3 und 8 einen Öffnungswinkel von etwa 130 Winkelgrade zeigen. Die Klappe 2 ist zwischen 90 und 130 Winkelgraden mit Memory-Effekt einstellbar. In der Fig. 1 bis 4 ist für die Einstellung eine federbelastete Drucktaste 26 in Form eines Hebels 44 vorgesehen. Durch Niederdrücken der Drucktaste 26 hebt der Haken 39 mit Bremsbelag vom Steg 40 des Segments 41 ab, so daß der Anschlag verstellt werden kann. Nach dem Loslassen der Drucktaste 26 ist die eingestellte Schwenkposition gespeichert. Die Wirkungsweise der Schwenkpositions-Verstelleinrichtung nach Fig. 5 entspricht der nach den Fig. 1 bis 4, wobei lediglich eine andere Bauform für die Drucktaste 26 vorgesehen ist.

Beim Ausführungsbeispiel gemäß Fig. 6 bis 9 ist anstelle einer Drucktaste ein Schieber 45 vorgesehen. Durch Verstellen des Schiebers 45 gegen die Kraft einer Rückstellfeder 30 wird die Sperre zwischen dem Schieber und einem Drehkörper 46 aufgehoben, so daß die Klappe 2 verstellt und optimal positioniert werden kann, obgleich der mit dem Drehkörper 46 starr verbundene Anschlag 47 am Grundkörper 1 anliegt. Es versteht sich von selbst, daß praktisch jede Schwenkposition zwischen etwa 90 und 130 Winkelgraden frei einstellbar und speicherbar ist.

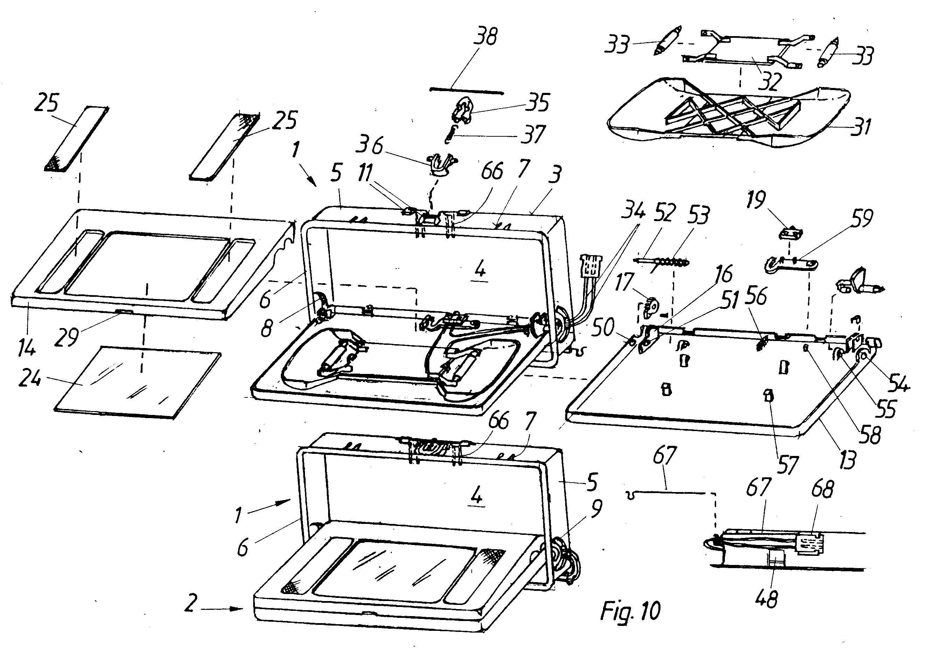

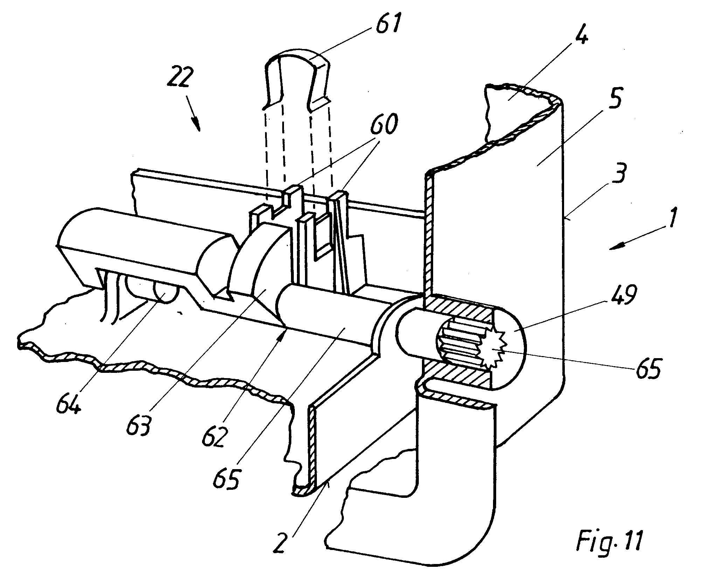

Beim Ausführungsbeispiel nach den Fig. 10 und 11 sind, soweit Übereinstimmung mit dem nach Fig. 5 besteht, die gleichen Bezugszeichen eingesetzt. Der Schminkspiegel besteht also auch hier aus einem Grundkörper 1 und einer daran angelenkten Klappe 2. Der Grundkörper 1 ist als Schale 3 ausgebildet und weist einen Schalenboden 4, Schalenwände 5 und einen Anlageflansch 6 auf. Die Schalenwände 5 sind einmal mit Klipsnasen 7 und auf der diesen gegenüberliegenden Seite mit Metallfedern 48 versehen, die eine leichte Montage/Demontage der kompletten Baueinheit ermöglichen. Durch Überdrücken der Metallfedern 48 bis auf Block wird die Baueinheit in den dafür vorgesehenen Öffnungsbereich eines Einbaukörpers eingeschoben und sodann eingeschwenkt, so daß die gegenüberliegenden starren Klipsnasen 7 einhaken können. Die Schale 3, die aus einem Kunststoff-Spritzgußteil besteht, weist weiterhin einen verzahnten Kreisabschnitt als Zahnstange 8, Lagerzapfenaufnahmen 49 (Fig. 11) und eine kurvenförmige Kulissennut 9 auf. An einer Schalenwand der Schale 3 sind Stege 11 angeformt, die zur Halterung einer Verriegelung dienen.

Die Klappe 2 besteht aus einem Gehäuse aus Kunststoff, welches aus einem Unterteil 13 und einem Oberteil 14 zusammengesetzt ist. Das Unterteil 13 ist schalenförmig ausgebildet und weist einseitig, eine erste Lagerbohrung 50 und, dieser beabstandet, eine zweite Lagerbohrung 51 auf, die in einem angeformten Steg 16 ausgebildet ist. Durch die Lagerbohrungen 50, 51 ist eine Lagerachse 52 geführt, die eine Öffnungsfeder 53 trägt und eine Lagerzapfenaufnahme 49 in der Schale 3 durchsetzt. Der Steg 16 dient zudem zum Befestigen einer Bremse 17 (deren Zahnrad mit der Zahnstange 8 kämmt). Das Unterteil 13 weist an der, den Lagerbohrungen 50, 51 gegenüberliegenden Seite, zwei weitere Lagerbohrungen 54, 55 auf, die einander beabstandet sind und von denen sich die letztere in einem am Unterteil 13 angeformten Steg befindet. Ferner weist das Unterteil 13 eine verzahnte Rastleiste 56, angeformte Klipselemente zur Halterung des Oberteils, angeformte Klipselemente 57 zur Halterung des Reflektors 31 sowie einen angeformten Zapfen 58 für ein Einstellelement 59 auf. Der Mikroschalter 19 wird auf das im Unterteil 13 drehbar und schwenkbar gelagerte und verzahnte Einstellelement 59 montiert, so daß er bei auftretenden Toleranzen genau ausgerichtet und eingestellt werden kann und seine Funktion gesichert ist. Durch einen am Oberteil 14 angespritzten Steg (nicht gezeigt) wird der federnde, verzahnte Bereich, der mit der Rastleiste 56 zusammenwirkt, verriegelt, so daß eine ungewollte Verstellung vermieden wird.

Das Oberteil 14 ist ebenfalls schalenförmig ausgebildet und trägt einen Sicherheitsspiegel 24 sowie in Ausnehmungen eingesetzte Leuchtfenster 25. Eine Ausnehmung 29 im vorderen Randbereich des Oberteils 14 ist zum Einrasten des Hakens 35 der Verriegelung 12 vorgesehen.

Bei der Schwenkpositions-Verstelleinrichtung 22 nach Fig. 10 und 11 ist, anders als beim Ausführungsbeispiel nach den Fig. 1 bis 9, kein Memory-Effekt gegeben. Vielmehr ist hier zum Halten der Klappe 2 in der jeweils eingestellten Gebrauchsstellung eine Bremse vorgesehen, deren Kraft beim Verstellen zu überwinden ist. Die individuelle Einstellung nach dem Ausklappen der Klappe 2 erfolgt über zwei am Unterteil 13 angespritzte Bremsstege 60, die mittels einer sie übergreifenden, U-förmig gestalteten Feder 61 unter Vorspannung gehalten werden. Ein an einer Lagerachse 62 integriertes Bremssegment 63 ist zwischen die Bremsstege 60 einschwenkbar, sobald die Klappe 2 den automatischen Öffnungsweg von etwa 90 ° passiert hat, so daß sodann eine stufenlose Einstellungsmöglichkeit bis hin zum größtmöglichen Öffnungswinkel gegeben ist.

Die Lagerachse 62 trägt einen ersten Lagerzapfen 64, der in die Lagerbohrung 55 eingreift, das Bremssegment 63 sowie einen zweiten, die Lagerbohrung 54 durchsetzenden und in die Lagerzapfenaufnahme 49 eingreifenden Lagerzapfen 65, bei dem es sich endseitig um einen mit Zähnen versehenen Einpreßzapfen handelt. Die Klappe 2 ist um die Lagerachse 52 und um den damit fluchtenden Lagerzapfen 62 (Lagerbohrung 54) und 64 drehbar. Die Lagerachse 62 ist bevorzugterweise als Kunststoff-Spritzgußteil ausgebildet.

Im Schalenboden 4 sind zwei Kunststoffzungen 66 ausgestellt, und zwar im Bereich neben der Verriegelung 12, um bei kräftigem Schliessen der Klappe ein Überdrücken derselben zu verhindern, d. h. eine Verriegelung auch bei unsachgemäßer Handhabung zu gewährleisten. Bei gewolltem Öffnen wird die Klappe 2 gegen die federnden Zungen 66 gedrückt und überdrückt, wobei gleichzeitig die Entriegelung ausgelöst wird und die Klappe 2 ausschwenkt.

An der Schalenrückseite wird ein Federdraht 67 für die Kabelführung montiert, der den Sinn hat, daß die Kabel bei der Montage nicht eingeklemmt werden können und nicht am Wagendach od. dgl. scheuern. Mit 68 ist eine Steckeraufnahme bezeichnet.

| Bezugszeichenliste | |
|---|---|
| 1 Grundkörper | 35 Haken |
| 2 Klappe | 36 Auslöser |
| 3 Schale | 37 Zugfeder |
| 4 Schalenboden | 38 Torsionsfeder |
| 5 Schalenwände | 39 Haken |
| 6 Anlageflansch | 40 Steg |
| 7 Klipsnasen | 41 Segment |
| 8 Zahnstange | 42 Drehfeder |
| 9 Kulissennut | 43 Mitnahmezapfen |
| 10 Kulissennut | 44 Hebel |
| 11 Stege | 45 Schieber |
| 12 Verriegelung | 46 Drehkörper |
| 13 Unterteil | 47 Anschlag |
| 14 Oberteil | 48 Metallfedern |
| 15 Lagerzapfen | 49 Lagerzapfenaufnahmen |
| 16 Steg | 50 Lagerbohrung |
| 17 Bremse | 51 Lagerbohrung |
| 18 Stege | 52 Lagerachse |
| 19 Mikroschalter | 53 Öffnungsfeder |
| 20 Lagerbohrung | 54 Lagerbohrung |
| 21 Drehlagerzapfen | 55 Lagerbohrung |
| 22 Schwenkpositions-Verstelleinrichtung | 56 Rastleiste |
| 23 Klipselement | 57 Klipselemente |
| 24 Sicherheitsspiegel | 58 Zapfen |
| 25 Leuchtfenster | 59 Einstellelement |
| 26 Drucktaste | 60 Bremsstege |
| 27 Schenkel | 61 Feder |
| 28 Ausnehmungen | 62 Lagerachse |
| 29 Ausnehmungen | 63 Bremssegment |
| 30 Druckfeder | 64 Lagerzapfen |
| 31 Reflektor | 65 Lagerzapfen |
| 32 Leiterplatte | 66 Kunststoffzungen |
| 33 Soffitten | 67 Federdraht |
| 34 elektr. Leiter | 68 Steckeraufnahme |

## Patentansprüche

1. Schminkspiegel od. dgl. für Fahrzeuge mit einem an einem Fahrzeug-Einbaukörper, wie Dachverkleidung, Sonnenblende, Kopfstütze od. dgl. befestigbaren Grundkörper (1) und mit einer, einen Spiegel (24) tragenden Klappe (2), die derart mit dem Grundkörper (1) verbunden ist, daß diese aus einer Ruhestellung in eine Gebrauchsstellung, in der der Spiegel (24) frei einsehbar ist, verschwenkbar ist, gekennzeichnet durch eine Schwenkpositions-Verstelleinrichtung (22) zum frei wählbaren Einstellen einer jeweils gewünschten Schwenkposition der Klappe (2) in der Gebrauchsstellung sowie zum Halten der Klappe (2) in der jeweils eingestellten Gebrauchsstellung.

2. Schminkspiegel nach Anspruch 1, dadurch gekennzeichnet, daß zum Halten der Klappe (2) in der jeweils eingestellten Gebrauchsstellung eine Bremse vorgesehen ist, die zwei Bremsstege (60) und ein dazwischen einschwenkbares Bremssegment (63) umfaßt.

3. Schminkspiegel nach Anspruch 2, dadurch gekennzeichnet, daß die Bremsstege (60) durch ein sie übergreifendes Federmittel (61) unter Vorspannung stehen.

4. Schminkspiegel nach Anspruch 1, gekennzeichnet durch eine Schwenkposition-Verstelleinrichtung (22) zum frei wählbaren Einstellen einer jeweils gewünschten Schwenkposition der Klappe (2) in der Gebrauchsstellung, zum Halten der Klappe (2) in der jeweils eingestellten Gebrauchsstellung sowie zum Speichern der eingestellten Gebrauchsstellung.

5. Schminkspiegel nach Anspruch 4, dadurch gekennzeichnet, daß die jeweils vorgebbare Schwenkposition der Klappe (2) in der Gebrauchsstellung durch eine form- oder kraftschlüssig wirkende Sperre, z.B. durch Verzahnung oder Reibungsbeanspruchung festlegbar ist.

6. Schminkspiegel nach Anspruch 5, dadurch gekennzeichnet, daß die Sperre gegen die Kraft eines Federmittels (30) lösbar und verstellbar ist.

7. Schminkspiegel nach wenigstens einem der Ansprüche 1 bis 6, dadurch gekennzeichnet, daß der Grundkörper (1) als in eine Öffnung des Fahrzeug-Einbaukörpers, wie Dachverkleidung, einsetzbare Schale (3) ausgebildet ist, die die Klappe (2) in der Ruhelage in versenkter Anordnung aufnimmt.

8. Schminkspiegel nach wenigstens einem der Ansprüche 4 bis 7, dadurch gekennzeichnet, daß die Klappe (2) als Gehäuse ausgebildet ist, aus deren in der Gebrauchslage dem Betrachter zugewandten Gehäusewand eine gegen die Kraft des Federmittels (30) betätigbare Drucktaste (26) zum Verstellen der innerhalb des Gehäuses angeordneten Einrichtung (22) vorsteht.

9. Schminkspiegel nach wenigstens einem der Ansprüche 1 bis 8, dadurch gekennzeichnet, daß die Klappe (2) als Gehäuse ausgebildet ist und an der, in der Gebrauchslage dem Betrachter zugewandten Gehäusewand den Speigel (24) sowie zumindest ein Leuchtfenster (25) trägt und daß das Gehäuse im Innern mit einer elektrischen Beleuchtungseinrichtung zum Ausleuchten des Leuchtfensters (25) ausgerüstet ist.

10. Schminkspiegel für Fahrzeuge mit einem an einem Fahrzeug-Einbaukörper, wie Dachverkleidung, Sonnenblende, Kopfstütze od. dgl. befestigbaren Grundkörper (1) und mit einer, einen Spiegel (24) tragenden Klappe (2), die derart mit dem Grundkörper (1) verbunden ist, daß diese aus einer Ruhestellung in eine Gebrauchsstellung, in der der Spiegel (24) frei einsehbar ist, verschwenkbar ist, insbesondere nach wenigstens einem der Ansprüche 1 bis 9, dadurch gekennzeichnet, daß zwischen Grundkörper (1) und Klappe (2) Federmittel (42) vorgesehen sind, durch die die Klappe (2) nach dem Lösen einer Verriegelung (12) aus dem Grundkörper (1) heraus bewegbar ist, wobei die Bewegung der Klappe (2) unter der Kraft der Federmittel (42) gegen die Kraft einer Bremse (17) erfolgt.

11. Schminkspiegel insbesondere nach Anspruch 10, dadurch gekennzeichnet, daß der Grundkörper (1) mit einer Zahnstange (8) und die Klappe (2) mit einem in die Zahnstange eingreifenden mit einer Fettbremse (17) od. dgl. verbundenen Zahnrad versehen ist.

12. Schminkspiegel nach wenigstens einem der Ansprüche 1 bis 11, dadurch gekennzeichnet, daß das Gehäuse aus einem Unterteil (13) aus Kunststoff und einem damit verklipsbaren Oberteil (14) aus Kunststoff besteht, wobei das Unterteil (13) die Schwenkpositions-Verstelleinrichtung (22), die elektrische Beleuchtungseinrichtung [Reflektor (31), Leiterplatte (32), Soffitten (33), Mikroschalter (19), Leiter (34)] und die Bremse (17) trägt, während das Oberteil (14) mit dem Spiegel (24), vorzugsweise zwei, links und rechts neben dem Spiegel (24) angeordnete Leuchtfenster (25) versehen ist.

13. Schminkspiegel nach Anspruch 12, dadurch gekennzeichnet, daß das Unterteil (13) weiterhin die Drucktaste (26) und die Federmittel (30) trägt und daß das Oberteil (14) mit einer Ausnehmung (28) für den bereichsweisen Durchlaß der sich im übrigen am Oberteil (14) abstützenden Drucktaste (26) versehen ist.

14. Schminkspiegel nach wenigstens einem der Ansprüche 1 bis 13, dadurch gekennzeichnet, daß das Unterteil (13) des Gehäuses an einem Randbereich zwei nach außen überstehende Gelenkzapfen (15, 21) aufweist, die in Zapfenaufnahmen des Grundkörpers (1) eingreifen, wobei ein Gelenkzapfen (21) Teil der aus einem Segment (41) gebildeten Schwenkpositions-Verstelleinrichtung (22) ist.

15. Schminkspiegel nach wenigstens einem der Ansprüche 1 bis 14, dadurch gekennzeichnet, daß die Verriegelung (12) eine aus Torsionsfeder (38), Auslöser (36), Zugfeder (37) und Haken (35) bestehende Baugruppe umfaßt, die an einem Randbereich des Grundkörpers (1) angeordnet ist, wobei der Haken (35) in eine randseitige Gehäuseöffnung (29) einrastbar bzw. aus dieser ausklinkbar ist.

16. Schminkspiegel nach wenigstens einem der Ansprüche 1 bis 15, dadurch gekennzeichnet, daß die Drucktaste (26) U-förmig ausgebildet ist, mit ihren höhenversetzten Schenkeln (27) zwei Durchbrüche (28) in den Randbereichen des Oberteils (14) durchsetzt und an einem Schenkelende einen mit einem Bremsbelag od. dgl. versehenen Haken (39) trägt, der mit dem Segment (41) zusammenwirkt, wobei der mit dem Haken (39) versehene Schenkel (27) der Drucktaste (26) durch eine, sich anderendig auf dem Unterteil (13) abstützende Schraubendruckfeder (30) belastet ist.

17. Schminkspiegel nach wenigstens einem der Ansprüche 1 bis 16, dadurch gekennzeichnet, daß das Segment (41) außer dem Gelenkzapfen (21) mit einem zu diesem parallel verlaufenden Mitnehmerzapfen (43) und einem zu diesem parallel verlaufenden Führungszapfen ausgebildet ist, wobei auf dem Gelenkzapfen (21) der Spiral-oder Schraubenteil einer Öffnungsfeder (42) sitzt, deren einer Schenkel am Mitnehmerzapfen (43) im Sinne einer Öffnungsbewegung des Gehäuses angreift und deren anderer Schenkel sich am Schalenrand abstützt, und wobei der Führungszapfen in einer kurvenförmigen Kulissennut (10) der Schale (3) bzw. des Grundkörpers (1) geführt ist.

18. Schminkspiegel nach wenigstens einem der Ansprüche 1 bis 17, dadurch gekennzeichnet, daß sämtliche Bestandteile desselben zu einer vorgefertigten Baueinheit zusammengefaßt sind.

19. Schminkspiegel nach wenigstens einem der Ansprüche 1 bis 18, dadurch gekennzeichnet, daß an der Schale (3), die aus einem Kunststoff-Spritzgußteil besteht, federnde Klipsnasen (7) angeordnet oder angeformt sind, die den Öffnungsrand in einem Einbaukörper, wie Dachverkleidung, hintergreifen.

## Claims

1. A vanity mirror or the like for vehicles with a support body (1) which may be secured to a vehicle fitting such as the roof lining, sun visor, headrest or the like, and with a flap (2) bearing a mirror (24), said flap (2) connected to the support body (1) such that it may be swivelled from a non-functional position into a functional position allowing an unobstructed view of the mirror (24), characterised in that a swivel-position adjustment device (22) is provided to enable any chosen setting of the desired swivel position of the flap (2) in the functional position and to hold the flap (2) in the functional position which has been set.

2. A vanity mirror according to Claim 1, characterised in that a brake is provided to hold the flap (2) in the functional position which has been set, said brake comprising two brake bars (60) and a brake segment (63) which may be swivelled in between them.

3. A vanity mirror according to Claim 2, characterised in that the brake bars (60) are under initial tension via an overlapping spring device (61).

4. A vanity mirror according to Claim 1, characterised by a swivel-position adjustment device (22) to enable any chosen setting of the desired swivel position of the flap (2) in the functional position, to hold the flap (2) in the set functional position and for storage of the set functional position.

5. A vanity mirror according to Claim 4, characterised in that the particular preset swivel position of the flap (2) in the functional position may be determined by a positive acting or non-positive acting locking device, for instance through toothing or frictional strain.

6. A vanity mirror according to Claim 5, characterised in that the locking device may be released and adjusted against the force of a spring device (30).

7. A vanity mirror according to at least one of Claims 1 to 6, characterised in that the support body (1) is in the form of a shell (3) which may be inserted in an opening in a vehicle fitting, such as the roof lining, which accommodates the flap (2) in a recessed arrangement in the non-functional position.

8. A vanity mirror according to at least one of Claims 4 to 7, characterised in that the flap (2) is in the form of a housing, with a push button (26), which can be actuated against the force of a spring device (30), projecting from the housing wall facing the observer when in the functional position, said push button (26) serving to adjust the device (22) arranged within the housing.

9. A vanity mirror according to at least one of Claims 1 to 8, characterised in that the flap (2) is in the form of a housing, and bears the mirror (24) and at least one luminous window (25) on that housing wall facing the observer in the functional position, and that the housing is provided in its interior with an electrical illumination device for illumination of the luminous window (25).

10. A vanity mirror for vehicles with a support body (1) which may be secured to a vehicle fitting such as the roof lining, sun visor, headrest or the like, and with a flap (2) bearing a mirror (24), said flap (2) connected to the support body (1) such that it may be swivelled from a non-functional position into a functional position allowing an unobstructed view of the mirror (24), in particular according to at least one of Claims 1 to 9, characterised in that spring devices (42) are provided between the support body (1) and the flap (2), said spring devices (42) facilitating the movement of the flap (2) out of the support body (1) following the release of a locking device (12), whereby the movement of the flap (2) is governed by the force of the spring device (42) against the force of a brake (17).

11. A vanity mirror especially according to Claim 10, characterised in that the support body (1) is provided with a toothed rack (8) and that the flap (2) is provided with a toothed wheel which engages in the toothed rack and is connected to a lubricated brake (17) or the like.

12. A vanity mirror according to at least one of Claims 1 to 11, characterised in that the housing comprises an underpart (13) of plastics material and an upper part (14) of plastics material which may be clipped onto said underpart (13) which bears the swivel-position adjustment device (22), the electrical illumination device [reflector (31), printed circuit board (32), tubular light bulb (33), microswitch (19), conductor (34)] and the brake (17), whilst the upper part (14) is provided with the mirror (24) and luminous windows (25), preferably two in number, on the left and right of the mirror (24).

13. A vanity mirror according to Claim 12, characterised in that the underpart (13) further bears the push button (26) and spring device (30) and that the upper part (14) is provided with a recess (28) for the partial passage of the push button (26) which otherwise is supported by the upper part (14).

14. A vanity mirror according to at least one of Claims 1 to 13, characterised in that the underpart (13) of the housing has two outward-projecting pivot journals (15, 21) on a peripheral region, said journals (15, 21) engaging in the journal receptacles of the support body (1), whereby one pivot journal (21) is part of the swivel-position adjustment device (22) formed from one segment (41).

15. A vanity mirror according to at least one of Claims 1 to 14, characterised in that the locking device (12) is a unit comprising a torsion spring (38), tripping device (36), tension spring (37) and hook (35), said unit arranged on a peripheral region of the support body (1), whereby the hook (35) may be engaged in a lateral housing opening (29) or disengaged therefrom.

16. A vanity mirror according to at least one of Claims 1 to 15, characterised in that the push button (26) is U-shaped and projects with its height-displaced limbs (27) through two openings (28) in the peripheral regions of the upper part (14) and bears a hook (39), provided with a brake pad or the like on one limb end, said hook (39) working together with the segment (41), whereby that limb (27) of the push button (26) provided with the hook (39) is loaded with a helical compression spring (30) which is supported at its other end by the underpart (13).

17. A vanity mirror according to at least one of Claims 1 to 16, characterised in that the segment (41) is provided, apart from the pivot journal (21), with a parallel-running driving pin (43) and a parallel-running guide pin (43), whereby the spiral or screw part of an opening spring (42) sits on the pivot journal (21), one limb of said opening spring (42) engaging with the driving pin (43) to open the housing and the other limb supported at the shell periphery, and whereby the guide pin is guided in a curvilinear link groove (10) of the shell (3) or the support body (1).

18. A vanity mirror according to at least one of Claims 1 to 17, characterised in that all component parts are combined to form one pre-fabricated unit.

19. A vanity mirror according to at least one of Claims 1 to 18, characterised in that resilient clips (7) are arranged on or moulded onto the shell (3), which is a plastics material injection-moulded part, said clips (7) engaging from behind in a fitting such as the roof lining.

## Revendications

1. Miroir de courtoisie ou similaire pour véhicule automobile comportant une embase (1) à fixer sur un corps intégré au véhicule, tel qu'un revêtement de toit, un pare-soleil, un appui-tête ou similaire, ainsi qu'un abattant (2) portant un miroir (24), qui est assemblé à l'embase(1) de manière qu'il puisse pivoter d'une position de repos dans une position d'utilisation, dans laquelle le miroir (24) est librement visible, caractérisé par un dispositif de réglage de position de pivotement (22) pour le réglage librement sélectionnable d'une position pivotée voulue de l'abattant (2) dans la position d'utilisation ainsi que pour maintenir l'abattant (2) dans la position d'utilisation réglée.

2. Miroir de courtoisie selon la revendication 1, caractérisé en ce que pour maintenir l'abattant (2) dans la position d'utilisation réglée, il est prévu un frein qui comporte deux cloisons (60) et un segment (63) pouvant pivoter entre celles-ci.

3. Miroir de courtoisie selon la revendication 2, caractérisé en ce que les cloisons (60) du frein sont maintenues sous précontrainte par un moyen à ressort (61) passant sur celles-ci.

4. Miroir de courtoisie selon la revendication 1, caractérisé par un dispositif de réglage de position de pivotement (22) pour le réglage librement sélectionnable d'une position pivotée voulue de l'abattant (2) dans la position d'utilisation, pour maintenir l'abattant (2) dans la position d'utilisation réglée ainsi que pour mémoriser la position d'utilisation réglée.

5. Miroir de courtoisie selon la revendication 4, caractérisé en ce que la position pivotée de l'abattant (2) dans la position d'utilisation, à imposer dans chaque cas, peut être fixée par un dispositif de blocage agissant par concordance de forme ou par force, par exemple par une denture ou par une sollicitation en friction.

6. Miroir de courtoisie selon la revendication 5, caractérisé en ce que le dispositif de blocage peut être déverrouillé et réglé à l'encontre de la force d'un moyen à ressort (30).

7. Miroir de courtoisie selon l'une au moins des revendications 1 à 6, caractérisé en ce que l'embase (1) est une coque (3) à placer dans une ouverture du corps intégré au véhicule, par exemple du revêtement de toit, laquelle coque loge l'abattant (2), de manière encastrée, dans sa position de repos.

8. Miroir de courtoisie selon l'une au moins des revendications 4 à 7, caractérisé en ce que l'abattant (2) est un boîtier qui comporte un bouton-poussoir (26), à actionner à l'encontre de la force du moyen à ressort (30), dépassant de la paroi du boîtier tournée vers l'observateur en position d'utilisation, destiné à régler le dispositif (22) placé à l'intérieur du boîtier.

9. Miroir de courtoisie selon l'une au moins des revendications 1 à 8, caractérisé en ce que l'abattant (2) est un boîtier et porte, sur sa paroi tournée vers l'observateur en position d'utilisation, le miroir (24) ainsi qu'au moins une fenêtre lumineuse (25) et en ce que le boîtier est équipé à l'intérieur d'un dispositif d'éclairage électrique, destiné à éclairer la fenêtre lumineuse (25).

10. Miroir de courtoisie pour véhicule automobile comportant une embase (1) à fixer sur un corps intégré au véhicule, tel qu'un revêtement de toit, un paresoleil, un appui-tête ou similaire, ainsi qu'un abattant (2) portant un miroir (24), qui est assemblé à l'embase(1) de manière qu'il puisse pivoter d'une position de repos dans une position d'utilisation, dans laquelle le miroir (24) est librement visible, en particulier selon l'une au moins des revendications 1 à 9, caractérisé en ce qu'il est prévu entre l'embase (1) et l'abattant (2) des moyens à ressort (42) permettant de faire ressortir l'abattant (2) de l'embase (1), après déblocage d'un verrouillage (12), le mouvement de l'abattant (2) s'effectuant sous la force des moyens à ressort (42), à l'encontre de la force d'un frein (17).

11. Miroir de courtoisie en particulier selon la revendication 10, caractérisé en ce que l'embase (1) est pourvu d'une crémaillère (8) et l'abattant (2) d'une roue dentée s'engageant dans la crémaillère, reliée à un frein à graisse (17) ou similaire.

12. Miroir de courtoisie selon l'une au moins des revendications 1 à 11, caractérisé en ce que le boîtier est constitué d'une partie inférieure (13) en matière plastique et d'une partie supérieure (14) en matière plastique, à clipser sur la première, la partie inférieure (13) portant le dispositif de réglage de position de pivotement (22), le dispositif d'éclairage électrique [réflecteur (31), plaque de circuits imprimés (32), lampes tubulaires (33), microinterrupteur (19), conducteurs (34)] et le frein (17), tandis que la partie supérieure (14) avec le miroir (24) est pourvue de préférence de deux fenêtres lumineuses (25) disposées à gauche et à droite du miroir (24).

13. Miroir de courtoisie selon la revendication 12, caractérisé en ce que la partie inférieure (13) porte en outre le bouton-poussoir (26) et les moyens à ressort (30) et en ce que la partie supérieure (14) est pourvue d'un évidement (28) pour le passage partiel du bouton-poussoir (26) prenant appui par ailleurs contre la partie supérieure (14).

14. Miroir de courtoisie selon l'une au moins des revendications 1 à 13, caractérisé en ce que la partie inférieure (13) du boîtier présente, sur une zone de bordure, deux axes d'articulation (15, 21), dépassant vers l'extérieur, qui s'engagent dans des logements de l'embase (1), un axe d'articulation (21) faisant partie du dispositif de réglage de position de pivotement (22) formé sur un segment (41).

15. Miroir de courtoisie selon l'une au moins des revendications 1 à 14, caractérisé en ce que le verrouillage (12) comporte un ensemble formé d'un ressort de torsion (38), d'un déclencheur (36), d'un ressort de traction (37) et d'un crochet (35), qui est monté sur une zone de bordure de l'embase (1), le crochet (35) pouvant s'encliqueter dans une ouverture (29) pratiquée dans le bord du boîtier ou être dégagé de celle-ci.

16. Miroir de courtoisie selon l'une au moins des revendications 1 à 15, caractérisé en ce que le bouton-poussoir (26) est en U, en ce qu'avec ses branches (27) décalées en hauteur il traverse deux ajours (28) pratiqués dans les zones de bordure de la partie supérieure (14) et porte à l'extrémité d'une branche un crochet (39) pourvu d'une garniture de frein ou similaire, qui coopère avec le segment (41), la branche (27) du bouton-poussoir (26), pourvue du crochet (39), étant soumise à l'action d'un ressort de pression hélicoïdal (30), prenant appui à son autre extrémité sur la partie inférieure (13).

17. Miroir de courtoisie selon l'une au moins des revendications 1 à 16, caractérisé en ce que le segment (41) est formé, outre de l'axe d'articulation (21), d'un axe d'entraînement (43) parallèle au premier et d'un pion de guidage parallèle à celui-ci, sur l'axe d'articulation (21) reposant la partie en spirale ou hélicoïdale d'un ressort d'ouverture (42) dont une branche agit sur le doigt d'entraînement (43), dans le sens d'un mouvement d'ouverture du boîtier et dont l'autre branche prend appui contre le bord de la coque, et le pion de guidage étant guidé dans une rainure de coulisse (10) en forme de courbe de la coque (3) ou de l'embase (1).

18. Miroir de courtoisie selon l'une au moins des revendications 1 à 17, caractérisé en ce que tous les composants de celui-ci sont réunis en une unité de construction préfabriquée.

19. Miroir de courtoisie selon l'une au moins des revendications 1 à 18, caractérisé en ce que sur la coque (3), qui est un élément en matière plastique moulée par injection, sont montés ou formés des ergots de clipsage (7) élastiques qui passent derrière le bord d'ouverture dans un corps intégré, tel que le revêtement de toit.
